# EUROPEAN PATENT APPLICATION

(11) **EP 0 868 844 A1**
(43) Date of publication of application: **07.10.1998**
(21) Application number: 98302618.8
(22) Date of filing: 02.04.1998
(51) Int. Cl.: A01G 9/12, B65D 63/10

(54) **Ties**

(30) Priority: 05.04.1997 GB 9706969
(71) Applicant: BOWTHORPE PLC, Crawley, West Sussex RH10 2RZ (GB)
(72) Inventor: Blanks, Steven John, Winsford, Cheshire, CW7 2TU (GB)
(74) Representative: Evans, Huw David Duncan

(57) **Abstract**

A method of fastening a tie, for example to hold a to a supporting stake , the method comprising the steps of providing a one-piece plastics tie having an elongate strap 10 provided with a longitudinally extending series of apertures 11 and a series of serrations 12 co-extending therewith, forming one end of the strap 10 into a loop around an article, such as a tree or plant, inserting a free end of the strap through any one of the apertures, pulling the strap through that aperture such that the serrations thereon successively engage the edges of the aperture and releasing the strap once the loop is sufficiently tight. The opposite end of the strap may then be fastened to another article such as a stake, say by forming a secondary loop. The tie is simple in construction and yet versatile, since it can be formed into a loop at any point along its length.

## Description

This invention relates to a method of fastening ties, and more particularly but not solely to a method of fastening horticultural ties.

It is well known to attach trees and other plants to posts or poles, in order to keep them upright and prevent them from breaking during adverse weather conditions.

GB 2 209 111 discloses a tie especially adapted for tying plants etc. to posts or poles, the tie comprising an elongate strap provided at one end with a series of apertures and with a serrated edge at its opposite end. In use, the tie is looped around the plant etc. and its opposite ends fastened together by inserting the end with the serrated edge through one of the apertures in the opposite end. A disadvantage of this arrangement is that the tie has to be carefully positioned, in order to ensure that the end with the serrated edge is free and accessible. Furthermore, it is not possible to form the tie into two loops which are fastened independently of each other.

EP 0 625 303 discloses, at Figures 8 and 9, a horticultural tie comprising two straps of diamond-shape frame-like elements joined corner-to-corner, which extend from an apertured body. In use, the straps are formed into individual loops and independently fastened to the body by attaching one of their diamond-shaped elements to respective pegs disposed on the body.

A disadvantage of this arrangement is that it is complicated in construction, and furthermore the straps have to be fastened to the body, thereby making the tie less versatile.

We have now devised a method of fastening a tie around one or more articles, which alleviates the above-mentioned problems.

In accordance with this invention, there is provided a method of fastening a tie, the method comprising the steps of providing a tie having an elongate strap provided with a longitudinally extending series of apertures and a series of serrations co-extending therewith, forming the strap into a loop around the article(s) to be tied, inserting a free end of the strap through a said aperture, pulling the strap through the aperture such that the serrations thereon successively engage the edges of said aperture and releasing the strap once the loop is sufficiently tight.

The strap serrations and the apertures co-extend along the strap, and thus the tie can be fastened into a loop at any point along its length merely by passing the strap through itself. The strap serrations engage the edges of the aperture through which the strap is passed, thereby holding the tie in a loop.

In the case where articles need to be tied separately, then preferably the opposite end of the strap is formed into a secondary loop around a further article or articles.

In one embodiment, the secondary loop is formed by engaging a catch, which is disposed at said opposite end of the strap with another said aperture of the strap.

In an alternative embodiment, the secondary loop is formed by inserting the opposite end of the strap through another said aperture, pulling the strap through said other aperture such that the serrations thereon successively engage the edges of said other aperture and releasing the strap once the secondary loop is sufficiently tight.

Preferably a tie is provided having a flat strap which comprises the serrations on at least one longitudinal side edge thereof, the width of the strap between each pair of adjacent serrations being less than the width of the apertures.

Preferably a strap is provided having serrations that have oppositely inclined surfaces which converge towards their respective crests. Thus, the serrations can easily be pulled through the aperture, since the forwardly facing inclined surfaces of the serrations ride over the edges of the aperture as the strap is tightened. When the strap is released, the aperture remains held between adjacent serrations.

When a conventional tie is applied tightly around a tree or other plant, there is a danger that the tie could snap as the plant grows. However, a tie which is applied in accordance with this invention will undo itself as the plant grows and exerts a radial force on the tie. When this happens the oppositely inclined surfaces of the serrations ride over the edges of the aperture through which the strap extends.

Preferably the tie is stretched as it is tightened, in order to hold the article(s) securely.

Embodiments of this invention will now be described by way of examples only and with reference to the accompanying drawings, in which:
Figure 1 is a plan view of an embodiment of horticultural tie for use in a method in accordance with this invention;
Figure 2 is a plan view of an alternative embodiment of horticultural tie for use in a method in accordance with this invention; and
Figure 3 is a perspective view of one end of the tie of Figure 2.

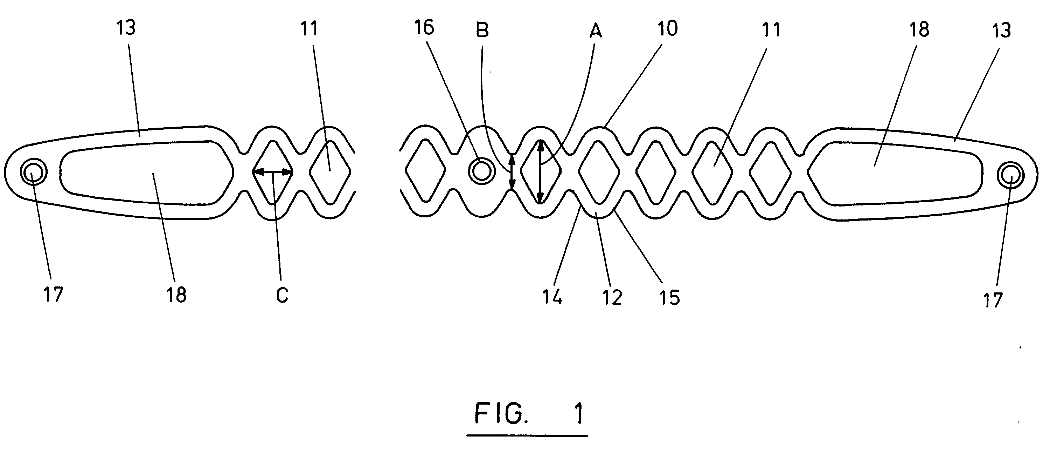

Referring to Figure 1 of the drawings, there is shown a one-piece plastics horticultural tie consisting of an elongate flat strap 10. The central portion of the strap 10 comprises a longitudinally-extending series of diamond-shaped apertures 11. Opposite side edges of the strap 10 are serrated, and the serrations 12 are arranged symmetrically about the longitudinal axis of the strap.

Each diamond-shaped aperture 11 is disposed between two serrations 12 arranged on respective opposite side edges of the strap 10. Each serration 12 comprises oppositely inclined surfaces 14, 15, which meet at the tip thereof. The oppositely inclined opposed surfaces 14, 15 of adjacent serrations meet at the base of the trough therebetween.

The width A of each diamond-shaped aperture 11 is greater than the distance B between troughs on opposite edges of the strap.

A diamond-shaped aperture 11 is disposed between each pair of opposite serrations 12, with the exception that, intermediate opposite ends of the strap, a small circular aperture 16 is alternatively provided.

The opposite outer end portions 13 of the strap 10 are generally pointed, the opposite side edges of the strap converging from the crests of respective end serrations towards respective opposite ends of the strap. Small circular apertures 17 are preferably provided adjacent opposite ends of the strap. Each end portions 13 of the strap may comprise an aperture 18 as shown, however this is not essential. If provided, the apertures 18 are preferably defined by peripheral surfaces which substantially co-extend with the side edges of the strap, in order to improve the aesthetic appearance of the tie.

Preferably in its as-moulded condition, the tie is much shorter than shown. The plastics material of the tie is resiliently flexible, and thus the tie can be stretched, thereby separating the serrations and opening up the diamond-shaped apertures as shown.

In use, the tie can be used to tie a plant to a stake by stretching the tie and forming it into a single loop around the plant and the stake. The tie is then fastened by inserting either end through one of the apertures 11 in the strap. The end 13 of the strap 10 is then pulled through the aperture until the desired tension is reached. As the strap 10 is pulled, the forwardly inclined surfaces (14 or 15) of opposed serrations 13 abut an edge of the aperture 11, thereby laterally compressing the opposed serrations 13 towards each other and/or widening the aperture 11, such that successive serrations can pass through the aperture 11.

When the strap is released, the aperture 11 becomes wedged between opposed pairs of serrations 13 on opposite sides of the strap 10, thereby holding the strap in a loop. As the plant grows, it exerts a radial force on the tie, which causes the strap to stretch until the force is sufficient to pull the first pair of opposed serrations 13 back through the aperture 11. In this way, the tie adjusts itself automatically as the plant grows.

In an alternative mode of use, the tie is fastened to the stake by inserting a nail or screw through one of the small circular apertures 16, 17. The tie can then be formed into a loop around the plant.

It may be desirable to independently fasten the tie into separate loops around the plant and stake respectively. In order to achieve this, one end of the tie is formed into a loop around the stake and fastened as hereinbefore described by inserting one end of the strap through an aperture 11 in the strap 10. Likewise, the opposite end of the strap is formed around the plant and fastened as hereinbefore described by inserting the other end of the strap 10 through a different aperture 11.

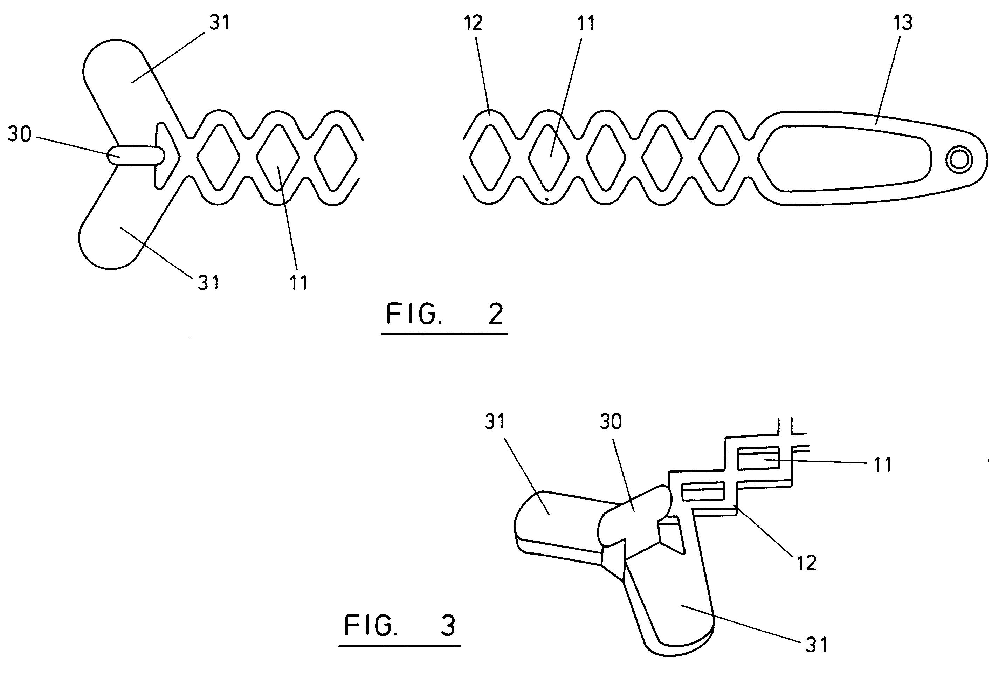

Referring to Figures 2 and 3 of the drawings, there is shown an alternative embodiment of horticultural tie and like parts are given like reference numerals. In this embodiment, a T-shaped hook 30 projects from one side of the strap at one end thereof. A pair of tabs 31 are disposed adjacent the T-shaped hook 30 and project outwardly in opposite directions respectively.

In use, the strap can be locked in a loop of predetermined diameter by inserting the T-shaped hook through one of the diamond-shaped apertures 11. The tabs 31 act as a handle for holding the T-shaped hook whilst it is inserted through an aperture 11. If desired, the opposite end 13 of the strap can be formed into a secondary loop, in the same manner as the embodiment of Figure 1.

## Claims

1. A method of fastening a tie, the method comprising the steps of providing a tie having an elongate flat strap provided with a longitudinally extending series of apertures and a series of serrations co-extending therewith, forming the strap into a loop around the article(s) to be tied, inserting a free end of the strap through a said aperture, tightening the strap by pulling its free end through the aperture such that the strap serrations successively engage the edges of said aperture, thereby causing the strap to laterally compress sufficiently for the serrations to pass through the aperture as the strap is tightened, and releasing the strap once it is sufficiently tight in said loop.

2. A method as claimed in claim 1, in which the opposite end of the strap is formed into a secondary loop around a further article or articles.

3. A method as claimed in claim 2, in which the secondary loop is formed by engaging a catch, which is disposed at said opposite end of the strap with another said aperture of the strap.

4. A method as claimed in claim 2, in which the secondary loop is formed by inserting a free opposite end of the strap through another said aperture, tightening the strap by pulling said free opposite end of the strap through said other aperture such that the strap serrations thereon successively engage the edges of said other aperture, thereby causing the strap to laterally compress sufficiently for the serrations to pass through said other aperture as the strap is tightened, and releasing the strap once it is sufficiently tight in said second loop.

5. A method as claimed in any preceding claim, in which a tie is provided having a strap which comprises the serrations on at least one longitudinal side edge thereof, the width of the strap between each pair of adjacent serrations being less than the width of the apertures.

6. A method as claimed in any preceding claim, in which a strap is provided having serrations that have oppositely inclined surfaces which converge towards their respective crests.

7. A method as claimed in any preceding claim, in which the tie is stretched as it is tightened, in order to hold the article(s) securely.
